# EUROPÄISCHE PATENTSCHRIFT

(11) **EP 1 876 060 B1**
(45) Veröffentlichungstag und Bekanntmachung des Hinweises auf die Patenterteilung: **14.09.2011**
(21) Anmeldenummer: 07012924.2
(22) Anmeldetag: 02.07.2007
(51) Int. Cl.: B60R 9/10, B60R 9/06

(54) **Trageinrichtung für wenigstens ein Fahrrad**
Carrying device for at least one bicycle
Dispositif de support pour au moins un vélo

(30) Priorität: 08.07.2006 DE 102006031690
(43) Veröffentlichungstag der Anmeldung: 09.01.2008
(73) Patentinhaber: Magna Car Top Systems GmbH, 74321 Bietigheim-Bissingen (DE)
(72) Erfinder: Bergerhoff, Harald, 22143 Hamburg (DE); Waller, Michael, 22549 Hamburg (DE); Hahn, Gerald, 21255 Wistedt (DE)

(56) Entgegenhaltungen:
- EP-A- 1 759 919
- DE-A1- 10 348 679
- DE-A1- 10 352 644
- DE-A1-102004 021 709
- JP-A- 9 011 804
- US-A- 6 095 387

## Beschreibung

Die Erfindung betrifft eine Trageinrichtung für wenigstens ein Fahrrad, eingebaut in ein Kraftfahrzeug, insbesondere in einen Personenkraftwagen nach dem Oberbegriff des Patentanspruchs 1.

Aus der EP 1 759 919 A2 ist eine Trageinrichtung für wenigstens ein Fahrrad bekannt, die in ein Kraftfahrzeug, insbesondere in einen Personenkraftwagen, eingebaut ist. Die in einem Heck des Personenkraftwagens angeordnete Trageinrichtung ist aus einer Ruhestellung in eine Betriebsstellung bewegbar und mit Rückleuchten versehen. In der Ruhestellung der Trageinrichtung sind die Rückleuchten im Personenkraftwagen in der Ablagestellung verstaubar. In der Betriebsstellung der Trageinrichtung sind die Rückleuchten in eine Wirkstellung verbringbar. In dieser Wirkstellung sind die Rückleuchten mittels Schnellmontageeinrichtungen festlegbar, wobei jede Schnellmontageeinrichtung einer Rückleuchte eine Steckverbindung umfasst, die ein Aufnahmeelement und ein Einführelement aufweist. Das Aufnahmeelement und das Einführelement werden durch Rohrkörper gebildet. Außerdem weist jede Schnellmontageeinrichtung ein Fixierungselement auf.

Aus der DE 10 2004 021 709 A1 ist ein weiterer ausziehbarer Fahrradheckträger für Fahrzeuge bekannt, der mittels in Fahrzeuglängsrichtung verlaufenden Hohlträgern ausgefahren werden kann. An rückwärtigen Enden der Hohlträger ist ein Mittelteil eines Stoßfängers gehalten. In der ausgefahrenen Stellung des Fahrradheckträgers bzw. des Mittelteils sind von Längsseiten des Mittelteils Leuchtsteine weggeführt, die an Längsseiten gelagert zwischen einer Wirkstellung und einer Ruhestellung bewegbar sind.

Die DE 10 2004 035 429 A1 befasst sich mit einem Heckträger für ein Kraftfahrzeug, der zum Transport von Lasten, wie z.B. Fahrräder, bestimmt ist. Der Heckträger umfasst einen Grundträger, der aus dem Fahrzeug herausziehbar ausgebildet ist. Mit dem Grundträger unter Vermittlung eines Querträgers verbunden sind zwei beabstandete Beleuchtungskörper, die aus einer Ruhestellung in eine Gebrauchsstellung bewegbar sind. Hierzu werden die Beleuchtungskörper zur Fahrzeugaußenseite hin verschoben.

In der DE 102 57 903 A1 wird ein ausziehbarer Lastenträger für Kraftfahrzeuge beschrieben, der mit einer längsbeweglichen nach Art einer Schublade ausgeführten Lastenaufnahme versehen ist. Am hinteren Ende der Lastenaufnahme sind zwei mit Abstand zueinander angeordnete Leuchten vorgesehen, die in Fahrzeugquerrichtung aus einer ersten Position in eine zweite Position und umgekehrt bewegbar sind.

Gemäß der DE 43 40 009 C2 ist ein Kraftfahrzeug mit einer Hecktransportbrücke, vorzugsweise für den Fahrradtransport, ausgestattet, die mit einem an einer Unterseite des Fahrzeugs angebrachten Trägersystem versehen ist. Letzteres weist einen ausfahrbaren Träger auf, der an seiner Rückseite eine hochklappbare Reling besitzt. An der Reling ist ein Scheinwerfer angeordnet, der bei abgeklappter Reling und eingeschobenem Träger zum Fahrzeugboden hin ausgerichtet ist.

Es ist Aufgabe der Erfindung eine Trageinrichtung für wenigstens ein Fahrrad zu schaffen, die in ein Kraftfahrzeug, insbesondere einen Personenkraftwagen einbaubar ist und mit für eine Ruhestellung und eine Betriebsstellung der besagten Trageinrichtung funktionsgerecht gestalteten Heckleuchten ausgestattet ist, wobei eine einfache Handhabung bei zuverlässiger Funktionalität angestrebt ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Heckleuchten in der Betriebsstellung der Trageinrichtung in einer Wirkstellung festlegbar sind und dann die Funktion als Rückleuchten gezielt ausüben. Dagegen sind die Heckleuchten in der Ruhstellung der Trageinrichtung in eine räumlich günstige Ablagestellung verbringbar. Um die Rückleuchten in die Ablagestellung bzw. Wirkstellung umzurüsten, sind gut wirksame Schnellmontageeinrichtungen vorgesehen, die mit vertretbaren technischen Mitteln realisierbar sind. Dabei eignet sich für die entsprechende Schnellmontageeinrichtung eine aufwandsarme ein Aufnahmeelement und ein Einführelement besitzende Steckverbindung, die ohne weiters bedienbar ist. Sinngemäß trifft dies auch für das erfindungsgemäße Fixierungselement der Schnellmontageeinrichtung zu, das mit einem mittels eines Federelements belasteten Sperrglied das Einführelement relativ zum Aufnahmeelement positioniert, wobei besagtes Sperrglied mit einem Betätigungsmechanismus beeinflussbar ist.

Das Federelement kann durch eine vorbildlich wirksame Druckfeder dargestellt sein, und der Betätigungsmechanismus kann einen problemlos umsetzbaren Betätigungszapfen mit einem von der Druckfeder umgebenen Führungsabschnitt aufweisen. Dieser Betätigungszapfen kann mit einem ersten Anschlag für eine erste Endseite der Druckfeder versehen sein, wobei die Druckfeder sich mit einer zweiten Endseite an einer Innenseite einer Anschlagwand eines Gehäuseabschnitts abstützt. Baulich vorteilhaft ist, wenn ein als Verlängerung des Betätigungszapfens ausgeführter Lagerbolzen die Anschlagwand durchdringt und mit einem den Betätigungszapfen in axialer Richtung bewegbaren Handhebel durchdringt, der bei entsprechend ergonomischer Gestaltung zur leichten Bedienung des Fixierungselements beiträgt. Schließlich lässt sich durch die elektrische Schalteinrichtung zwischen Grundträger und Aufnahmeträger bewerkstelligen, dass die Rückleuchten in der Ablagestellung abgeschaltet sind, um möglicherweise störende Lichtwirkungen der Heckleuchten in der Ablagestellung auszuschließen.

In der Zeichnung wir eine Ausführungsbeispiel der Erfindung gezeigt, das nachstehend näher beschrieben wird.

Es zeigen
Fig. 1 eine Schrägansicht auf einen Personenkraftwagen von hinten links oben mit der Trageinrichtung nach der Erfindung,
Fig. 2 eine Schrägansicht von hinten links oben auf die sich in einer Betriebsstellung befindenden Trageinrichtung,
Fig. 3 eine Schrägansicht entsprechend Fig. 2, jedoch auf die sich in einer Ruhestellung befindenden Trageinrichtung,
Fig.4 eine Schrägansicht von vorne links oben auf eine sich in einer Wirkstellung befindenden Rückleuchte der Trageinrichtung,
Fig. 5 eine Ansicht etwa in Pfeilrichtung A der Fig.4,

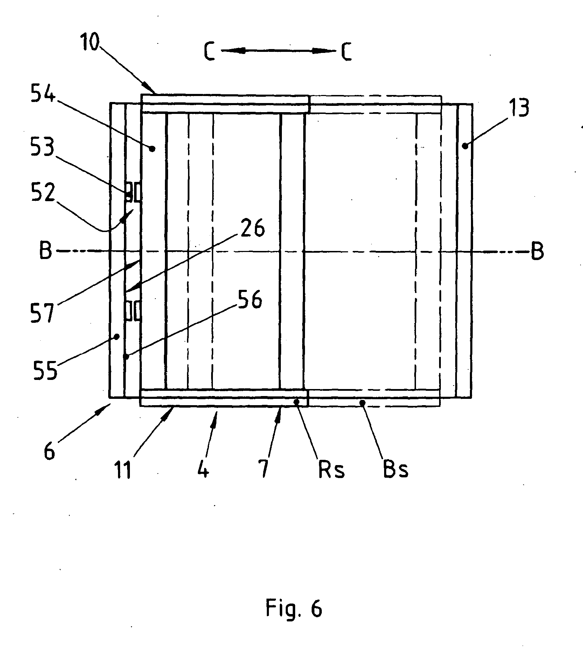

Fig. 6 eine schematische Ansicht von oben auf die Trageinrichtung mit einer elektrischen Schalteinrichtung nach der Erfindung.

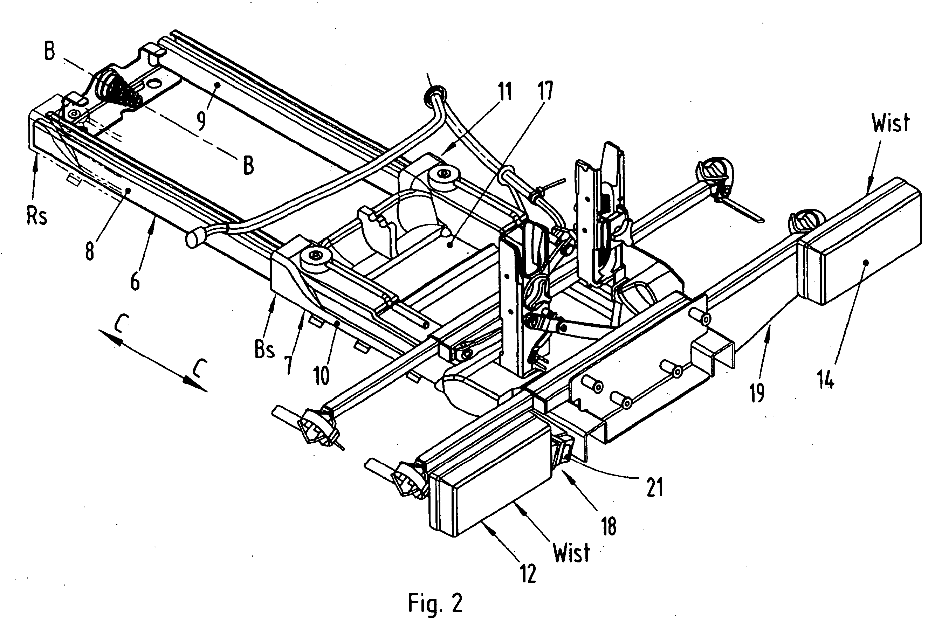

Von einem Personenkraftwagen 1 ist lediglich ein Heckteil 2 dargestellt, das in einer Mittellängsebene B-B -Fig. 2- eine Öffnung 3 zum Ausfahren einer Trageinrichtung 4 aufweist. Der Trageinrichtung 4 ist zum Transport eines Fahrrads 5 ausgebildet und umfasst einen Grundträger 6 und einen Aufnahmeträger 7 -Fig. 2-, an dem das quer zur Fahrzeuglängsrichtung C-C ausgerichtete Fahrrad 5 gehalten ist. Der Aufnahmeträger 7 ist in Fahrzeuglängsrichtung C-C zwischen einer Ruhestellung Rs und einer Betriebsstellung Bs und vice versa verstellbar ausgeführt -Fig. 2-. Hierzu sind am Grundträger 6 beiderseits der Mittellängsebene B-B innere Führungsschienen 8 und 9 vorgesehen, die mit äußeren Führungsschienen 10 und 11 des Aufnahmeträgers 7 zusammenarbeiten.

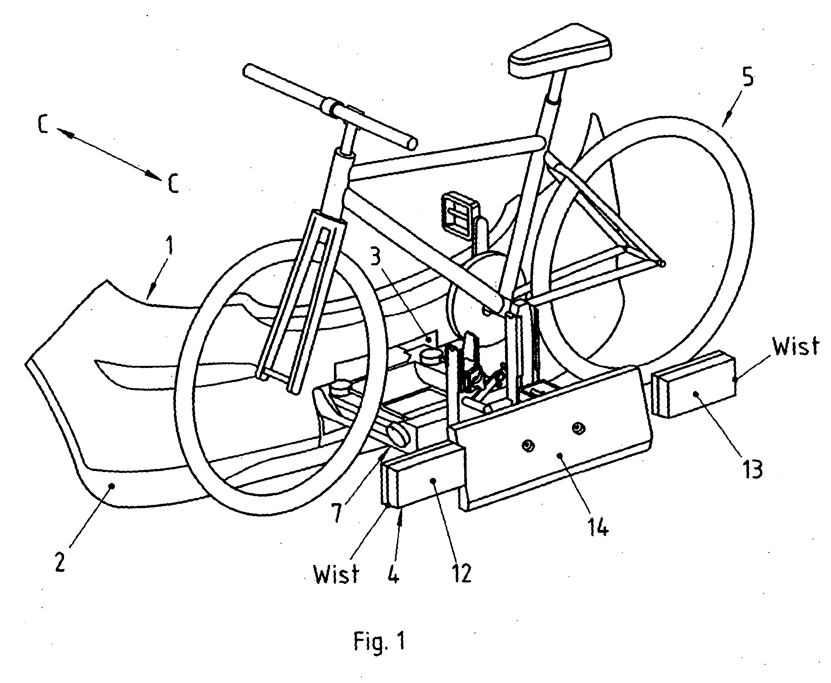

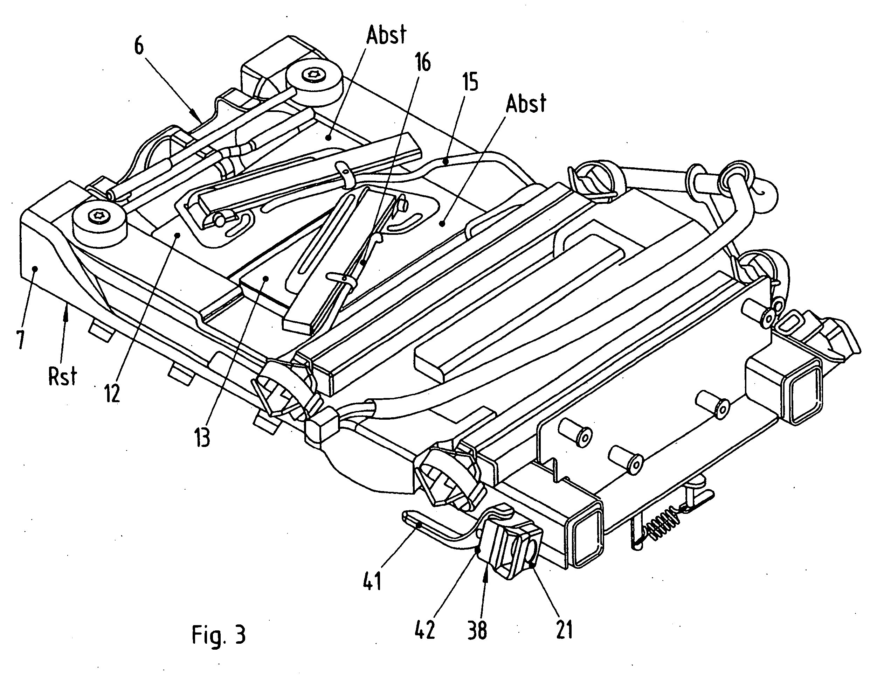

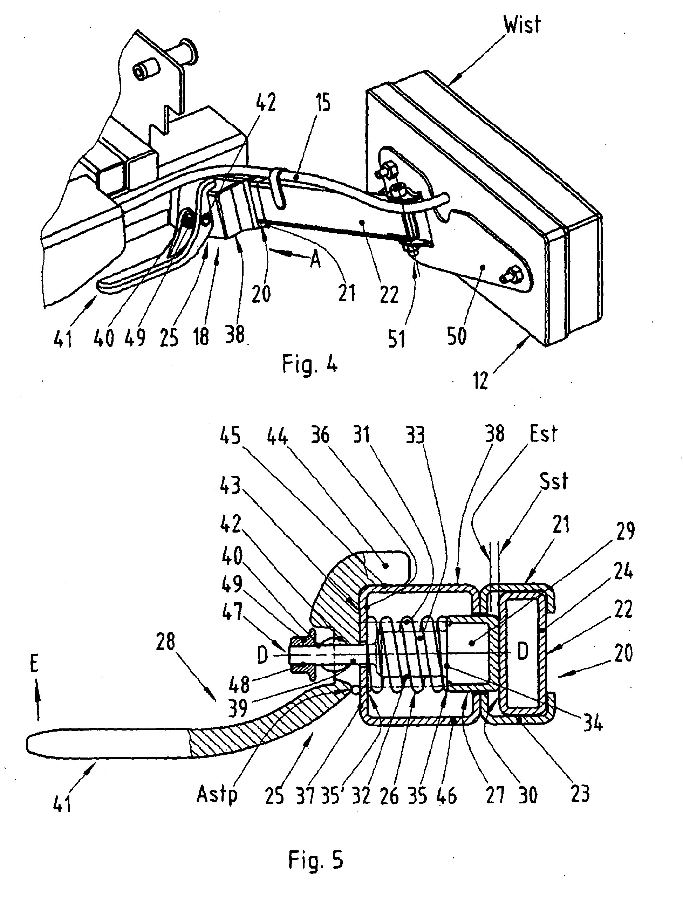

Mit der Trageinrichtung 4 verbunden sind Rückleuchten 12 und 13, die durch etwa rechteckige Körper gebildet werden und beiderseits einer die Öffnung 3 verschließenden Verkleidungswand 14 -Fig.1- bzw. der Mittellängsebene B-B angeordnet sind. Die Rückleuchten 12 und 13 sind unter Vermittlung elektrischer Kabel 15 und 16 -Fig. 3 und 4- an ein nicht gezeigtes Bordnetz des Personenkraftwagens 1 angeschlossen und in der Ruhestellung Rs des Aufnahmeträgers 7 in eine Ablagestellung Abst verstaubar. Hierfür ist in die Trageinrichtung 4 ein Aufbewahrungsraum 17 -Fig. 2- eingeformt, in dem die flach gelegten und weitgehend versenkten Rückleuchten 12 und 13 mit geeignetem Mitteln befestigt sind. Aus der Ablagestellung Abst können die Rückleuchten 12 und 13 vom Betreiber des Personenkraftwagens 1 manuell in eine Wirkstellung Wist verbracht und mittels Schnellmontageeinrichtungen 18 und 19 festgelegt werden.

Jede Schnellmontageeinrichtung z.B. 18 umfasst eine Steckverbindung 20 -Fig. 4 und 5-, die mit einem Aufnahmeelement 21 und einem Einführelement 22 versehen ist, wobei das Einführelement 22 an der Rückleuchte 12 angebracht ist. Das Aufnahmeelement 21 und das Einführelement 22 werden durch Rohrkörper 23 und 24 mit viereckigem bzw. rechteckigem Querschnitt gebildet. Darüber hinaus ist die Schnellmontageeinrichtung 18 mit einem an der Trageinrichtung 4 gehaltenen Fixierungselement 25 versehen, das mit einem mittels eines Federelements 26 belasteten Sperrglied 27 das Einführelement 22 relativ zum Aufnahmeelement 21 festsetzt. Zur Beeinflussung des Sperrglieds 27 dient ein Betätigungsmechanismus 28. Das Sperrglied 27 ist nach Art eines Druckstücks 29 aufgebaut, das mit einer Abstützwand 30 des Einführelements 22 zusammenarbeitet und auf einer der Abstützwand 30 zugekehrten Seite mit einem reibungserhöhenden Belag ausgestattet sein kann. Das Federelement 26 sucht das Druckstück 29 des Sperrglieds 27 in eine Sperrstellung Sst zu bewegen und ist als Druckfeder 31 ausgeführt.

Der Betätigungsmechanismus 28 weist einen Betätigungszapfen 32 mit einem von der Druckfeder umgebenen Führungsabschnitt 33 auf. Der Führungsabschnitt 33 ist mit einem ersten Anschlag 34 für eine erste Endseite 35 der Druckfeder 31 versehen, die sich mit einer zweiten Endseite 35' an einer Innenseite 36 einer Anschlagwand 37 eines Gehäuseanschnitts 38 abstützt. Der Betätigungszapfen 32 ist mit einem als Verlängerung 39 ausgeführter Lagerbolzen 40 ausgestattet, der die Anschlagwand 37 durchdringt und einen den Betätigungszapfen 32 in axialer Richtung D-D bewegbaren Handhebel 41 besitzt. Der Handhebel 41 ist um einen quer zum Lagerbolzen 40 angeordneten Achszapfen 42 beweglich und mit einer axialen Hubbewegungen -Richtung D-D- des Betätigungszapfens 32 bewirkenden Stützbahn 43 an der Anschlagwand 37 anliegt. Bei Bewegung des Handhebels In Richtung E wird das Druckstück 29 in eine Entriegelungsstellung Est -Fig. 5- bewegt, wobei sich die Stützbahn 43 um den Abstützpunkt Astp bewegt. Mit dem Handhebel 41 verbunden ist ein Ausrichtelement 44, das an einer Wand 45 des Gehäuseabschnitts 38 anliegt und den Handhebel 41 bei etwaigen radialen Bewegungen um den Betätigungszapfen 32 in seine vorgesehene Lage zurückführt. Der Gehäuseabschnitt 38 ist Teil eines Rohrkörpers 46, der unmittelbar an das Aufnahmeelement 21 herangeführt ist. Der Lagerbolzen 40 ist an einem freien Ende 47 mit einem Gewinde 48 für eine Schraubenmutter 49 versehen, über die der Handhebel 41 auf dem Betätigungszapfen 32 befestigt ist.

Das Einführelement 22 ist unter Zwischenschaltung einer Haltekonsole 50 mit der Rückleuchte 12 verbunden. Dabei ist das Einführelement 22 über Gelenk 51 mit der Haltekonsole 50 gekoppelt, dergestalt, dass das Einführelement 22 in der Ablagestellung Abst eine unsperrige Baueinheit mit der Rückleuchte 12 darstellt und in der Wirkstellung Wist die vorgesehen Konstruktionslage einnimmt.

Zwischen dem Grundträger 6 und dem Aufnahmeträger 7 der Trageinrichtung 4 ist eine elektrische Schalteinrichtung 52 vorgesehen, die in der Ablagestellung Abst und in der Wirkstellung Wist der Heckleuchte 12 letztere ab- bzw. zuschaltet. Die Schalteinrichtung 52 umfasst elektrische Schalter 53, die zwischen einem vorderen Rahmenelement 54 des Grundträgers 6 und einem vorderen Rahmenelement 55 des Aufnahmeträgers 7 angeordnet sind, und zwar an einander zugekehrten Seiten 56 und 57 der Rahmenelemente 54 und 55.

Schließlich ist der elektrische Schalter 53 als Reed-Kontakt-Relais ausgebildet und besitz einen Magnet und Kontaktzungen, welche Kontaktzungen mit Anschlussdrähten verbunden sind. Sobald ein Magnetfeld des Magnets über den Anschlussdrähten wirksam ist, wird ein elektrischer Kontakt bewerkstelligt.

## Patentansprüche

1. Trageinrichtung für wenigstens ein Fahrrad, eingebaut In ein Kraftfahrzeug, Insbesondere einen Personenkraftwagen, welche In einem Heck des Personenkraftwagens angeordnete Trageinrichtung aus einer Ruhestellung in eine Betriebsstellung bewegbar ist und mit Rückleuchten versehen ist und in der Ruhestellung der Trageinrichtung die Rückleuchten im Personenkraftwagen in eine Ablagestellung verstaubar sind, wogegen die Rückleuchten in der Betriebsstellung der Trageinrichtung in eine Wirkstellung verbringbar sind, welche
die Rückleuchten In der Wirkstellung mittels Schnellmontageeinrichtungen festlegbar sind, und
jede Schnellmantageeinrichtung einer Rückleuchte eine Steckverbindung umfasst, wobei
die Steckverbindung ein Aufnahmeelement und ein Einführelement aufweist, und
das Aufnahmeelement und das Einführekment durch Rohrkörper z.B. mit viereckigem Querschnitt gebildet werden, und darüber hinaus
jede Schnellmontageeinrichtung ein Fixierungselement aufweist,
**dadurch gekennzeichnet, dass** das Fixierungselement (25) mit einem mittels eines Federelements (26) belasteten Sperrglied (27) das Einführelement (22) relativ zum Aufnahmeelement (21) festsetzt, wobei das Sperrglied (27) mit einem Betätigungsmechanismus (28) beeinflussbar ist.

2. Trageinrichtung nach Anspruch 1, **dadurch gekennzeichnet, dass** das Sperrglied (27) ein Druckstück (29) umfasst, das mit einer Abstützwand (30) des Einführelements (22) zusammenarbeitet.

3. Trageinrichtung nach Anspruch 2, **dadurch gekennzeichnet, dass** des Druckstück (29) auf der der Abstützwand (30) zugekehrten Seite mit einem reibungserhöhenden Belag versehen ist.

4. Trageinrichtung nach den Ansprüchen 1 und 2, **dadurch gekennzeichnet, dass** das Federelement (26) das Druckstück (29) des Sperrglieds (27) in eine Sperrstellung (Sst) zu bewegen sucht.

5. Trageinrichtung nach Anspruch 1, **dadurch gekennzeichnet**, das Federelement (26) als Druckfeder (31) ausgeführt ist.

6. Trageinrichtung nach einem oder mehreren der vorangehenden Ansprüche, **dadurch gekennzeichnet**, das der Betätigungsmechanismus (28) einen Betätigungszapfen (32) mit einem von der Druckfeder (31) umgebenen Führungsabschnitt (33) aufweist, der mit einem ersten Anschlag (34) für eine erste Endseite (35) der Druckfeder (25) versehen ist, welche Druckfeder (25) sich mit einer zweiten Endseite (35') an einer Innenseite (36) einer Anschlagwand (37) eines Gehäuseabschnitts (38) abstützt.

7. Trageinrichtung nach Anspruch 6, **dadurch gekennzeichnet, dass** ein als Verlängerung (39) des Betätigungszapfens (32) ausgeführter Lagerbolzen (40) die Anschlagwand (37) durchdringt und mit einem den Betätigungszapfen (32) in axialer Richtung (D-D) bewegbaren Handhebel (37) versehen Ist.

8. Trageinrichtung nach Anspruch nach Anspruch 6, **dadurch gekennzeichnet, dass** der Handhebel (37) um einen quer zum Lagerbolzen (40) angeordneten Achszapfen (42) beweglich Ist und mit einer axiale Hubbewegungen des Betätigungszapfens (32) bewirkenden Stützbahn (43) an der der Anschlagwand (37) des Gehäuseabschnitts (38) anliegt.

9. Trageinrichtung nach Anspruch 7, **dadurch gekennzeichnet, dass** der Lagerbolzen (40) an einem freien Ende (47) ein Gewinde (48) für eine Schraubenmutter (49) besitzt, über die der Handhebel (41) auf dem Betätigungszapfen (32) festgelegt wird.

10. Trageinrichtung nach den Ansprüchen 6 und 8, **dadurch gekennzeichnet, dass** der Gehäuseabschnitt (38) Teil eines Rohrkörpers (46) Ist, der an das Aufnahmeelement (21) herangeführt ist.

11. Trageinrichtung nach Anspruch 1, **dadurch gekennzeichnet dass** die Rückleuchten (12 und 13) In der Ablagestellung (Abst) In der Trageinrichtung (4) befestigt sind.

12. Trageinrichtung nach Anspruch 11, **dadurch gekennzeichnet dass** für die Rückleuchten (12 und 13) In der Ablagestellung (Abst) ein Aufbewahrungsraum (17) ausgebildet ist.

13. Trageinrichtung nach Anspruch 1, **dadurch gekennzeichnet, dass** das Einführelement (22) an der Rückleuchte (12 oder 13) und das Fixierungselement (25) an der Tragvorrichtung (4) in Lage gehalten sind.

14. Tragvorrichtung nach Anspruch 13, **dadurch gekennzeichnet, dass** das Einführelement (22) an einem der Rückleuchte zugekehrten Ende über ein Gelenk (51) winkelbeweglich mit besagter Rückleuchte (12 oder 13) verbunden ist.

15. Trageinrichtung, die einen Grundträger und einen Aufnahmeträger für das Fahrrad umfasst, welcher Aufnahmeträger aus einer Ruhestellung In eine Betriebsstellung und vice versa verstellbar ist, nach Anspruch 1, **dadurch gekennzeichnet, dass** die Rückleuchten (12 und 13) in der Ablagestellung (Abst) bzw. In der Ruhestellung (Rs) des Aufnahmeträgers (7) mittels einer elektrischen Schalteinrichtung (52) beeinflussbar sind.

16. Trageinrichtung nach Anspruch 15, **dadurch gekennzeichnet, dass** die elektrische Schalteinrichtung (52) zwischen Grundträger (6) und Aufnahmeträger (7) wirksam ist.

17. Trageinrichtung nach Anspruch 16, **dadurch gekennzeichnet, dass** die elektrische Schalteinrichtung (52) nach Art eines Reed-Kontakt-Relais ausgebildet ist.

## Claims

1. Carrying device for at least one bicycle, installed in a motor vehicle, in particular a passenger car, which carrying device, which is arranged in the rear of the passenger car, can be moved out of a rest position into an operating position and is provided with rear lights and, in the rest position of the carrying device, the rear lights can be stowed away in a storage position in the passenger car, whereas, in the operating position of the carrying device, the rear lights can be moved into an operative position, it being possible to fix the rear lights in the operative position by means of quick-fitting devices, and each quick-fitting device for a rear light comprises a plug connection, wherein the plug connection has a holding element and an insertion element, and the holding element and the insertion element are formed by tubular bodies for example having a square cross section, and furthermore each quick-fitting device has a securing element, **characterized in that** the securing element (25) sets the insertion element (22) in relation to the holding element (21) with a locking member (27) which is loaded by means of a spring element (26), wherein the locking member (27) can be influenced by an actuating mechanism (28).

2. Carrying device according to Claim 1, **characterized in that** the locking member (27) comprises a pressure piece (29) which interacts with a supporting wall (30) of the insertion element (22).

3. Carrying device according to Claim 2, **characterized in that** the pressure piece (29) is provided on the side facing the supporting wall (30) with a friction-increasing coating.

4. Carrying device according to either of Claims 1 and 2, **characterized in that** the spring element (26) urges the pressure piece (29) of the locking member (27) to move into a locking position (Sst).

5. Carrying device according to Claim 1, **characterized in that** the spring element (26) is embodied as a compression spring (31).

6. Carrying device according to one or more of the preceding claims, **characterized in that** the actuating mechanism (28) has an actuating pin (32) having a guide portion (33) surrounded by the compression spring (31), which guide portion (33) is provided with a first abutment (34) for a first end side (35) of the compression spring (31), which compression spring (31) is supported by way of a second end side (35') against the inside (36) of an abutment wall (37) of a housing portion (38).

7. Carrying device according to Claim 6, **characterized in that** a bearing bolt (40) embodied as an extension (39) of the actuating pin (32) penetrates the abutment wall (37) and is provided with a hand lever (41) that can move the actuating pin (32) in the axial direction (D-D).

8. Carrying device according to Claim 6, **characterized in that** the hand lever (41) can move about an axial pin (42) arranged transversely to the bearing bolt (40) and rests, by way of a supporting track (43) that effects axial reciprocating movements of the actuating pin (32), against the abutment wall (37) of the housing portion (38).

9. Carrying device according to Claim 7, **characterized in that** the bearing bolt (40) has at one free end (47) a thread (48) for a nut (49), via which the hand lever (41) is fixed to the actuating pin (32).

10. Carrying device according to Claims 6 and 8, **characterized in that** the housing portion (38) is part of a tubular body (46) which is guided up to the holding element (21).

11. Carrying device according to Claim 1, **characterized in that** the rear lights (12 and 13) are secured in the carrying device (4) in the storage position (Abst).

12. Carrying device according to Claim 11, **characterized in that** a storage space (17) is formed for the rear lights (12 and 13) in the storage position (Abst).

13. Carrying device according to Claim 1, **characterized in that** the insertion element (22) is held in position on the rear light (12 or 13) and the securing element (25) is held in position on the carrying device (4).

14. Carrying device according to Claim 13, **characterized in that** the insertion element (22) is connected in an angularly movable manner to the rear light (12 or 13) at an end facing towards said rear light via a joint (51).

15. Carrying device, which comprises a basic support and a holding support for the bicycle, which holding support can be adjusted from a rest position into an operating position and vice versa, according to Claim 1, **characterized in that** the rear lights (12 and 13) can be influenced in the storage position (Abst) or in the rest position (Rs) of the holding support (7) by means of an electric switching device (52).

16. Carrying device according to Claim 15, **characterized in that** the electric switching device (52) acts between the basic support (6) and the holding support (7).

17. Carrying device according to Claim 16, **characterized in that** the electric switching device (52) is formed in the manner of a reed contact relay.

## Revendications

1. Dispositif de support pour au moins une bicyclette, incorporé dans un véhicule automobile, notamment un véhicule automobile léger, lequel dispositif de support disposé à l'arrière du véhicule automobile léger peut être déplacé d'une position de repos dans une position fonctionnelle et est pourvu de feux arrière, et dans la position de repos du dispositif de support, les feux arrière pouvant être escamotés dans une position de rangement dans le véhicule automobile léger, tandis que les feux arrière peuvent être amenés dans une position active dans la position fonctionnelle du dispositif de support, dans laquelle les feux arrière peuvent être fixés au moyen de dispositifs de montage rapide, et chaque dispositif de montage rapide d'un feu arrière comprenant un raccord enfichable, le raccord enfichable présentant un élément de réception et un élément d'insertion, et l'élément de réception et l'élément d'insertion étant formés par des corps tubulaires ayant par exemple une section transversale carrée, et chaque dispositif de montage rapide présentant en outre un élément de fixation,
**caractérisé en ce que** l'élément de fixation (25), conjointement avec un organe de verrouillage (27) sollicité au moyen d'un élément de ressort (26), fixe l'élément d'insertion (22) par rapport à l'élément de réception (21), l'organe de verrouillage (27) pouvant être influencé par un mécanisme d'actionnement (28).

2. Dispositif de support selon la revendication 1, **caractérisé en ce que** l'organe de verrouillage (27) comprend un élément de pression (29) qui coopère avec une paroi d'appui (30) de l'élément d'insertion (22).

3. Dispositif de support selon la revendication 2, **caractérisé en ce que** l'élément de pression (29) est pourvu sur son côté tourné vers la paroi d'appui (30) d'un revêtement augmentant les frottements.

4. Dispositif de support selon les revendications 1 et 2, **caractérisé en ce que** l'élément de ressort (26) a tendance à déplacer l'élément de pression (29) de l'organe de verrouillage (27) dans une position de verrouillage (Sst).

5. Dispositif de support selon la revendication 1, **caractérisé en ce que** l'élément de ressort (26) est réalisé sous forme de ressort de compression (31).

6. Dispositif de support selon l'une quelconque ou plusieurs des revendications précédentes, **caractérisé en ce que** le mécanisme d'actionnement (28) présente un tourillon d'actionnement (32) avec une portion de guidage (33) entourée par le ressort de compression (31), laquelle est pourvue d'une première butée (34) pour un premier côté d'extrémité (35) du ressort de compression (31), lequel ressort de compression (31) s'appuie avec un deuxième côté d'extrémité (35') sur un côté interne (36) d'une paroi de butée (37) d'une portion de boîtier (38).

7. Dispositif de support selon la revendication 6, **caractérisé en ce qu'**un boulon de palier (40) réalisé sous forme de prolongement (39) du tourillon d'actionnement (32) traverse la paroi de butée (37) et est pourvu d'un levier manuel (41) pouvant déplacer le tourillon d'actionnement (32) dans la direction axiale (D-D).

8. Dispositif de support selon la revendication 6, **caractérisé en ce que** le levier manuel (41) peut être déplacé autour d'un tourillon d'axe (42) disposé transversalement au boulon de palier (40), et s'applique avec une piste d'appui (43) provoquant des mouvements de course axiale du tourillon d'actionnement (32) contre la paroi de butée (37) de la portion de boîtier (38).

9. Dispositif de support selon la revendication 7, **caractérisé en ce que** le boulon de palier (40) possède à une extrémité libre (47) un filetage (48) pour un écrou (49) par le biais duquel le levier manuel (41) est fixé sur le tourillon d'actionnement (32).

10. Dispositif de support selon les revendications 6 et 8, **caractérisé en ce que** la portion de boîtier (38) fait partie d'un corps tubulaire (46) qui est approché contre l'élément de réception (21).

11. Dispositif de support selon la revendication 1, **caractérisé en ce que** les feux arrière (12 et 13) sont fixés dans le dispositif de support (4) dans la position de rangement (Abst).

12. Dispositif de support selon la revendication 11, **caractérisé en ce qu'**un espace de stockage (17) est réalisé pour les feux arrière (12 et 13) dans la position de rangement (Abst).

13. Dispositif de support selon la revendication 1, **caractérisé en ce que** l'élément d'insertion (22) est maintenu en position sur le feu arrière (12 ou 13) et l'élément de fixation (25) est maintenu en position sur le dispositif de support (4).

14. Dispositif de support selon la revendication 13, **caractérisé en ce que** l'élément d'insertion (22) est connecté audit feu arrière (12 ou 13), de manière déplaçable angulairement par le biais d'une articulation (51) au niveau d'une extrémité tournée vers le feu arrière.

15. Dispositif de support qui comprend un support de base et un support de réception pour la bicyclette, lequel support de réception peut être déplacé d'une position de repos dans une position fonctionnelle et vice versa, selon la revendication 1, **caractérisé en ce que** les feux arrière (12 et 13) peuvent être influencés au moyen d'un dispositif de commutation électrique (52) dans la position de rangement (Abst) ou dans la position de repos (Rs) du support de réception (7).

16. Dispositif de support selon la revendication 15, **caractérisé en ce que** le dispositif de commutation électrique (52) agit entre le support de base (6) et le support de réception (7).

17. Dispositif de support selon la revendication 16, **caractérisé en ce que** le dispositif de commutation électrique (52) est réalisé à la manière d'un commutateur-relais à tiges.
